# EUROPÄISCHE PATENTSCHRIFT

(11) **EP 2 489 538 B1**
(45) Veröffentlichungstag und Bekanntmachung des Hinweises auf die Patenterteilung: **20.03.2013**
(21) Anmeldenummer: 12155434.9
(22) Anmeldetag: 14.02.2012
(51) Int. Cl.: B60K 15/04

(54) **Füllstutzen für den Treibstofftank eines Kraftfahrzeuges mit selektiver Öffnung**
Filling platform for the fuel tank of a motor vehicle with selective opening
Manchon de remplissage pour le réservoir de carburant d'un véhicule automobile doté d'une ouverture sélective

(30) Priorität: 17.02.2011 DE 102011011518
(43) Veröffentlichungstag der Anmeldung: 22.08.2012
(73) Patentinhaber: Magna Steyr Fuel Systems GesmbH, 8261 Sinabelkirchen (AT)
(72) Erfinder: Walser, Herbert, 8262 Ilz (AT); Steinmann, Dominik, 8223 Stubenberg (AT)
(74) Vertreter: Rausch, Gabriele

(56) Entgegenhaltungen:
- WO-A1-2007/095869
- DE-A1-102010 002 448
- DE-U1-202005 012 256

## Beschreibung

Die Erfindung betrifft einen Füllstutzen für den Treibstofftank eines Kraftfahrzeuges mit einem Trichtereinsatz und tankeinwärts daran anschließend einer Klappe mit einer Verriegelung, wobei die Klappe um eine im Raum verlagerbare Scharnierachse drehbar und von zwei jeweils um eine Achse schwenkbaren Elementen gehalten ist, und die Klappe nur freigegeben wird, wenn beide Elemente von dem Füllrohr einer Zapfpistole gleichzeitig beiseite geschwenkt werden.

Damit wird bei Tanks für Dieseltreibstoff erreicht, dass die Klappe nur bei Einführen des Füllrohres einer Zapfpistole mit ausreichend großem Durchmesser entriegelt wird und geöffnet werden kann. Ein Füllrohr für Benzin hat einen kleineren Durchmesser, sodass damit nicht beide Elemente gleichzeitig verschwenkt werden können. Weil Fehlbetankung in der Regel zur Zerstörung des Motors führt, muss sie unter allen Umständen verhindert werden.

### Stand der Technik

Aus der WO 2006/007618 A1 ist ein gattungsgemäßer Füllstutzen bekannt. Dadurch, dass die Scharnierachse der Klappe und deren Verriegelung nicht raumfest sind, können sich die Klappe und die sie haltenden Elemente einer Schrägstellung eines Füllrohres mit kleinem Durchmesser entsprechend ausrichten. So kann die Verriegelung nicht mehr überlistet werden. Bei Einführen eines Füllrohres mit dem "richtigen" Durchmesser reitet dieses auf zwei einander zugewandte Nocken der Elemente auf und die beiden Elemente werden gleichzeitig nach außen gedrängt. Es hat sich aber gezeigt, dass die um eine gemeinsame Achse schwenkbaren Elemente kinematisch ungünstig sind, weil so die zum Öffnen der Verriegelung nötige Kraft in Längsrichtung und der Verschleiß der Nocken sehr groß ist.

Aus der DE 20 2007 010 406 U1 ist ein Kanister für Dieselkraftstoff bekannt, mit einem dicht verschließbaren Hals und einer in den Hals eingesetzten Fehlbetankungsvorrichtung. Der Kanister weist ein Aufnahmeelement für das Auslaufrohr einer Zapfpistole auf, dass von einer Zapfpistole auseinanderdrängbar ist und das Umfangsteile besitzt mit einem Aufnahmebereich und einem Haltebereich.

Die DE 10 2010 002 448 A1 offenbart eine Kraftstoffbehälteröffnungsschließvorrichtung mit einem Klappventilmechanismus. Diese Vorrichtung weist Einführungsdrückteile auf und einen Sperrmechanismus, der angepasst ist, Sperrelemente mit den Einführungsdrückteilen von einer gesperrten Position zu einer ungesperrten Position zu bewegen.

Aus der DE 20 2005 012256 U1 ist eine Fehlbetankungsvorrichtung für einen Füllstutzen eines Behälters mit den Merkmalen des Oberbegriffs des Anspruch 1 bekannt, mit einem von seinem Innenumfang her zumindest an gegenüberliegenden Wandbereichen radial auseinander drängbaren Aufnahmeelement und einer ausgangsseitig am Aufnahmeelement angeordneten Klappe, die im Ruhezustand des Aufnahmeelementes dieses verriegelnd verschließt und bei auseinandergedrängtem Aufnahmeelement entriegelt und bei Druck öffnenbar ist.

### Problem/Lösung

Es ist daher das Erfindung zugrunde liegende Problem, einen gattungsgemäßen Füllstutzen so weiterzubilden, dass das Öffnen der Klappe minimale Betätigungskräfte erfordert und bei möglichst niederen Fertigungskosten eine weiter verbesserte Zuverlässigkeit der Funktion erreicht wird.

Erfindungsgemäß wird das im Wesentlichen dadurch erreicht, dass die beiden Elemente um voneinander in Querrichtung beabstandete Achsen schwenkbar sind und dass sie durch die Kraft der zwischen ihnen wirkenden Feder zu einander gespannt sind. Die beabstandeten Achsen liegen ungefähr über dem Berührungspunkt des Füllrohres der Zapfpistole und die Normale auf den Berührungspunkt ist sehr weit von der Achse des Elementes entfernt. Die damit erreichten günstigen kinematischen und Kraftverhältnisse ergeben - mit dem "richtigen" Füllrohr - ein leichtgängiges Öffnen der Klappe und geringen Verschleiß. Dadurch dass die Federkraft zwischen den Elementen (und nicht zwischen ihnen und dem Fülltrichter beziehungsweise dem Füllstutzen) wirken, bleibt ihre Wirkung auf beide Elemente auch bei schief eingeführtem Füllrohr der Zapfpistole in vollem Umfang erhalten. Sie kann dadurch auch mit größtem Geschick nicht überlistet werden.

Die Lagerung für die Elemente ist beiderseits am Trichtereinsatz angeordnet und es ist jeweils ein Lagerteil mit dem Trichtereinsatz und der zweite Lagerteil mit dem Element einstückig. Dadurch wird eine geringe Anzahl an Bauteilen und durch die weit voneinander entfernten Lager jeweils eines Elementes eine stabile Lagerung der Elemente erreicht. Dazu sind die Elemente so ausgebildet, dass sie jeweils den Trichtereinsatz von einem Lager zum anderen umgreifende Bügel bilden und zum Inneren des Tanks hin in einen Scharnierteil beziehungsweise in den Verriegelungshaken übergehen.

In einer Vorteilhaften Ausführungsform besteht die Lagerung für die ersten und für die zweiten Elemente jeweils aus Hohlzylindern mit einer Durchbrechung am Trichtereinsatz oder am Element und aus abgeflachten Lagerzapfen am Element oder am Trichtereinsatz. Die Durchbrechungen und die Abflachungen sind so angeordnet, dass die Lagerzapfen bei der Montage - vor dem Einbau in den Füllstutzen - in die Hohlzylinder einführbar sind und dann in ihre Betriebsstellung abwärts geschwenkt werden. In dieser Stellung können die Lagerzapfen die Hohlzylinder nicht mehr verlassen. In einer bevorzugten Ausbildung sind die Hohlzylinder mit Durchbrechung am Trichtereinsatz angeformt, sie könnten aber auch an den Elementen angebracht sein.

In einer alternativen Ausführungsform besteht die Lagerung der ersten und zweiten Elemente jeweils aus zylindrischen Zapfen ohne Abflachungen und aus geschlossenen Hohlzylindern, wobei die Elemente elastisch biegsam sind, sodass sie bei der Montage aufgebogen werden können. Vorzugsweise sind jeweils die Zapfen am Trichtereinsatz angeordnet.

In einer weiteren besonders vorteilhaften Ausführungsform besteht die Lagerung der ersten und zweiten Elemente jeweils aus zylindrischen Zapfen und aus geschlossenen Hohlzylindern, wobei die Elemente durch Spritzen in eine Form hergestellt sind, in die der Trichtereinsatz eingelegt ist. Man spricht bei dieser Herstellungsmethode auch von Umspritzen, wobei die in der Form bloßliegenden Teile des Trichtereinsatzes mit einer meist flüssig aufgebrachten Trennschicht versehen sind. Auch hier sind vorzugsweise jeweils der Zapfen am Trichtereinsatz und der Hohlzylinder am Element ausgebildet.

Ein vorteilhaftes Detail besteht darin, dass die Elemente durch mindestens eine (oder zwei) unterhalb des Lagers an ihnen angreifende Zugfeder zu einander gespannt sind. Das ergibt eine große Federkraft in allen Winkelstellungen der Elemente und erhöhte Sicherheit.

### Figuren

- Fig. 1:: Einen Füllstutzen, mit den erfindungsgemäßen Einbauten
- Fig. 2:: Ansicht II in Fig. 1,
- Fig. 3:: Die erfindungsgemäßen Einbauten in einer ersten Ausführungsform von schräg unten gesehen,
- Fig. 4:: Wie Fig. 3, jedoch von schräg oben gesehen,
- Fig. 5:: Zwei Montage-Stadien (a), (b), zur ersten Ausführungsform
- Fig. 6:: Die erfindungsgemäßen Einbauten in einer zweiten Ausführungsform.

### Beschreibung

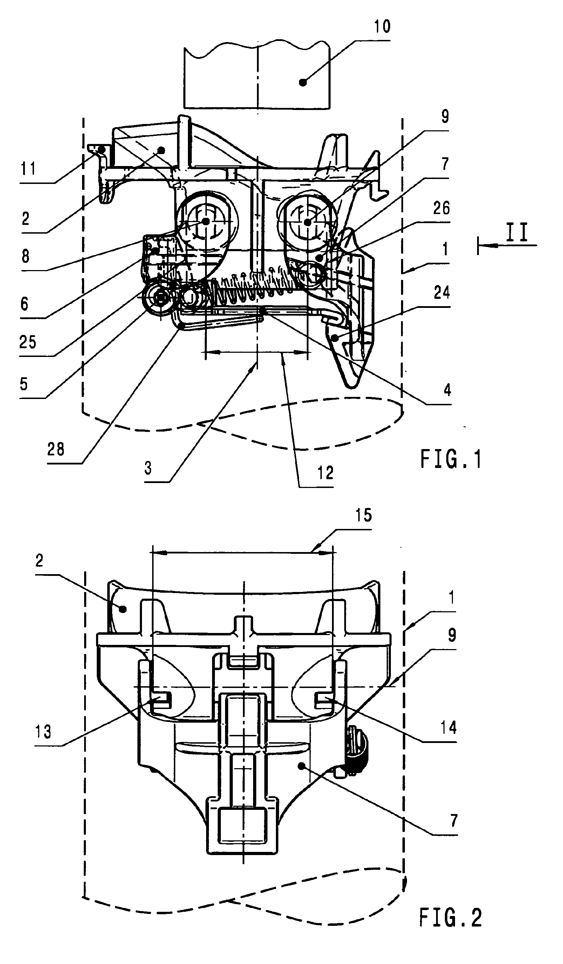

In **Fig. 1** ist der zu einem nicht dargestellten Treibstofftank gehörende Füllstutzen 1 strichliert angedeutet, weil weil dessen Form und gegebenenfalls weitere Einbauten für die Erfindung unwesentlich ist. Wesentlich ist der Trichtereinsatz 2 mit an seinem unteren Ende einer Klappe 4. Der Trichtereinsatz 2 ist beispielsweise mittels Teilen 11 im Füllstutzen 1 befestigt, kann aber auf beliebige andere Weise befestigt sein. Die Klappe 4 ist um eine Scharnierachse 5 einwärts schwenkbar. Das Füllrohr einer Zapfpistole 10 ist nur angedeutet und die Mittellinie des Füllstutzens 1 ist mit 3 bezeichnet. An dem Trichtereinsatz 2 ist ein erstes Element 6 um eine erste Achse 8 und ein zweites Element 7 um eine zweite Achse 9 schwenkbar angelenkt. Die Achsen 8,9 sind auf gleicher Höhe in einem Abstand 12 voneinander angeordnet, welcher Abstand etwa so groß (hier etwas kleiner als) wie die Breite der Klappe 4 ist.

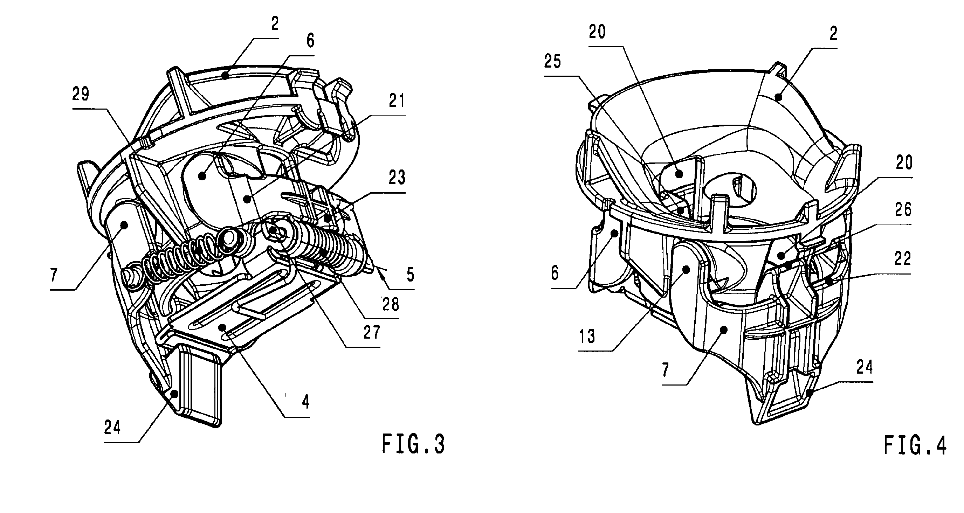

Das erste Element 6 ist nahe seinem oberen Ende beiderseits des Trichtereinsatzes 2 schwenkbar gelagert und hat an seinem unteren Ende die Scharnierachse 5 für die Klappe 4 und eine sie in Schließrichtung belastende Schenkelfeder 28. Das zweite Element 7 ist auch beiderseits des Trichtereinsatzes 2 schwenkbar gelagert und bildet an seinem unteren Ende einen Verriegelungshaken 24, der die Klappe 4 in geschlossener Stellung hält, bis das Füllrohr 10 mit dem richtigen (größeren) Durchmesser gleichzeitig beide Rampen 25, 26 nach außen drückt. Die Rampen 25,26 sind an den beiden Elementen 6,7 ausgebildet und in Fig. 1 strichliert angedeutet. In Fig.4 sind sie besser zu sehen.

In **Fig. 2****,** die eine um 90 Grad gedrehte Ansicht zur Fig. 1 ist, ist zu sehen, dass das zweite Element 7 (wie auch das erste Element 6) an beiden Seiten des Trichtereinsatzes 2 mittels jeweils einer Lagerung 13,14 gelagert ist. Die beiden Lagerungen haben voneinander einen Abstand 15 und können erfindungsgemäß verschieden ausgebildet sein, wie in den folgenden Figuren zu sehen.

**Fig. 3** und **Fig. 4** zeigen den Erfindungsgegenstand räumlich. Zunächst ist zu erkennen, dass die beiden Elemente 6,7 die weit auseinander liegenden Lagerungen 13,14 verbindende und den Trichtereinsatz 2 außen umgebende Bügel 21,22 sind, die nach unten in einen Verriegelungshaken 24 beziehungsweise in einen Scharnierteil 23 übergehen. Der Scharnierteil 23 ist von der Schenkelfeder 28 umwunden und enthält einen an seinen Enden vernieteten Stift 27 als Schwenkachse für die Klappe 4. In ihrer Mitte bilden die Bügel Rampen 25,26, die durch Fenster 20 (Fig. 4) ins Innere des Trichtereinsatzes 2 ragen. Zwischen den beiden Elementen 6,7 ist unter den Achsen 8,9 eine Zugfeder 29 angebracht, die sie (6,7) zu einander zieht und die Klappe 4 so verriegelt hält. Bis hierher trifft die Beschreibung auf alle Ausführungsformen und Varianten zu.

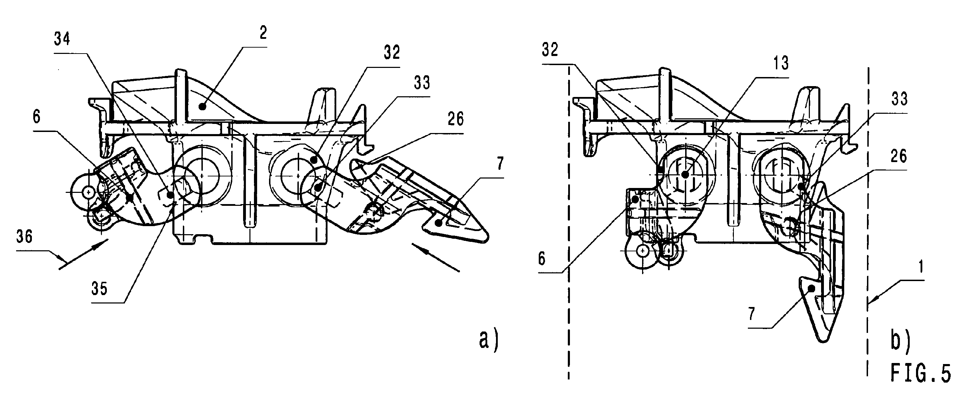

**Fig. 5** zeigt die Lagerungen 13,14, die für beide Elemente 6,7 jeweils gleich sind, in einer ersten Ausführungsform. Sie werden von zwei Lagerungsteilen gebildet, jeweils einem am Trichtereinsatz 2 und einem an den Elementen 6,7. Die Lagerungsteile sind am Trichtereinsatz 2 angeformte Hohlzylinder 32 mit jeweils einer Durchbrechung 33. Die Durchbrechung 33 ist ungefähr der Wand des Füllstutzens 1 zugewandt. An den Elementen 6,7 sind Lagerzapfen 34 mit beiderseits ebenen Abflachungen 35 angeformt. Die Abflachungen 35 sind so ausgerichtet, dass sie durch die Durchbrechungen 33 nur einführbar (Pfeil 36) sind, wenn das Element sich in ungefähr horizontaler Lage befindet (siehe Fig. 5. a)). Diese Stellung ist nur möglich, bevor der so zusammengebaute Trichtereinsatz 2 in den Füllstutzen 1 eingesetzt ist. In eingebauter und abwärts verschwenkter Stellung (siehe Fig. 5. b)) nicht mehr. Ebenso könnten als Variante aber auch die Hohlzylinder mit Durchbrechung an den Elementen 6,7 angeformt sein und die Zapfen mit Abflachung am Trichtereinsatz.

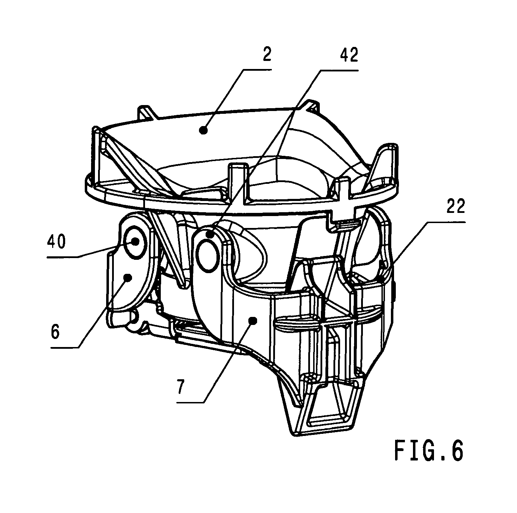

Die Ausführungsform der **Fig. 6** unterscheidet sich von der eben beschriebenen dadurch, dass ein rundum geschlossener Hohlzylinder 42 und ein zylindrischer Zapfen 40 ohne Abflachungen an die Stelle der Teile 32,34 der ersten Ausführungsform tritt. Für die Herstellung beziehungsweise Montage gibt es zwei Möglichkeiten. Entweder die Bügel 21,22 der Elemente 6,7 werden elastisch auseinander gebogen, sodass beiderseits die nur kurzen Zapfen 40 in die Hohlzylinder 42 einrasten können. Oder die Herstellung der Elemente 6,7 erfolgt "in situ" nach einem neuerdings möglichen Verfahren: Der Trichtereinsatz 2 wird so in eine Form eingelegt, dass nur die dann mit den Elementen 6,7 in Berührung kommenden Flächen bloß liegen. Diese Flächen werden mit einer Beschichtung versehen, die eine stoffschlüssige Verbindung des in der Folge in die entsprechend gestaltete Form zur Bildung der Elemente eingespritzen Kunstoffes (mit tieferem Schmelzpunkt) verhindert.

## Patentansprüche

1. Füllstutzen für den Treibstofftank eines Kraftfahrzeuges mit einem Trichtereinsatz (2) und tankeinwärts daran anschließend einer Klappe (4) mit einer Verriegelung, wobei die Klappe (4) um eine im Raum verlagerbare Scharnierachse (5) drehbar und von zwei jeweils um eine Achse (8,9) schwenkbaren Elementen (6,7) gehalten ist, und die Klappe (4) nur freigegeben wird, wenn beide Elemente (6,7) von dem Füllrohr (10) einer Zapfpistole gleichzeitig beiseite geschwenkt werden, wobei
a) das erste Element (6) um eine erste Achse (8) schwenkbar ist und an seinem von der ersten Achse (8) entfernten Ende die Scharnierachse (5) hält,
b) das zweite Element (7) um eine zweite Achse (9) schwenkbar ist und an seinem von der zweiten Achse (9) entfernten Ende einen Verriegelungshaken (24) bildet,
c) wobei die beiden Achsen (8,9) in Querrichtung voneinander einen Abstand (12) haben und die beiden Elemente (6,7) durch zumindest eine Feder (29) zu einander gespannt sind,
**dadurch gekennzeichnet, dass** die Lagerung (13,14) für die Elemente (6,7) beiderseits des Trichtereinsatzes (2) angeordnet und jeweils ein Lagerteil (32, 42; 34,40) mit dem Trichtereinsatz (2) und der andere Lagerteil (34, 40; 32, 42) mit dem jeweiligen Element (6;7) einstückig ist, wobei die Elemente (6,7) jeweils den Trichtereinsatz (2) von einem Lager (13) zum anderen (14) umgreifende Bügel (21,22) bilden und zum Inneren des Tanks hin in einen Scharnierteil (23) beziehungsweise in den Verriegelungshaken (24) übergehen.

2. Füllstutzen nach Anspruch 1, **dadurch gekennzeichnet, dass** die Lagerung (13,14) für die ersten und für die zweiten Elemente (6,7) jeweils aus einerseits Hohlzylindern (32) mit einer Durchbrechung (33) und andererseits aus Lagerzapfen (34) mit Abflachungen (35) besteht, wobei die Durchbrechungen (33) der Hohlzylinder (32) und die Abflachungen (35) der Lagerzapfen (34) so angeordnet sind, dass die Lagerzapfen (34) nur in einer im Betrieb unerreichbaren Stellung in die Hohlzylinder (32) einführbar sind.

3. Füllstutzen nach Anspruch 2, **dadurch gekennzeichnet, dass** bei der Lagerung (13,14) der ersten und der zweiten Elemente (6,7) die Hohlzylinder (32) mit Durchbrechung (33) am Trichtereinsatz (2) angebracht sind.

4. Füllstutzen nach Anspruch 1, **dadurch gekennzeichnet, dass** die Lagerung (13,14) der ersten und zweiten Elemente (6,7) jeweils aus zylindrischen Zapfen (40) und aus geschlossenen Hohlzylindern (42) besteht, wobei die Elemente (6,7) elastisch biegsam sind, sodass jeweils die Distanz (15) zwischen den Lagerungen (13,14) eines Elementes (6,7) zur Montage elastisch vergrößerbar ist.

5. Füllstutzen nach Anspruch 4, **dadurch gekennzeichnet, dass** bei der Lagerung (13,14) der ersten und zweiten Elemente (6,7) jeweils die Zapfen (40) am Trichtereinsatz (2) angeordnet sind.

6. Füllstutzen nach Anspruch 1, **dadurch gekennzeichnet, dass** die Lagerung (13,14) der ersten und zweiten Elemente (6,7) jeweils aus zylindrischen Zapfen (40) und aus geschlossene Hohlzylindern (42) besteht, wobei die Elemente (6,7) durch Spritzen in eine Form hergestellt sind, in die der Trichtereinsatz eingelegt ist, wobei die Elemente (6,7) durch Umspritzen des Zapfens (40), beziehungsweise durch Einspritzen des Zapfens hergestellt sind.

7. Füllstutzen nach Anspruch 6, **dadurch gekennzeichnet, dass** bei der Lagerung (13,14) der ersten und zweiten Elemente (6,7) jeweils der Zapfen (40) am Trichtereinsatz (2) und der Hohlzylinder(42) am Element (6,7) ausgebildet ist.

8. Füllstutzen nach Anspruch 1, **dadurch gekennzeichnet, dass** die beiden Elemente (6,7) durch zumindest eine unterhalb der Lagerung (13,14) an ihnen angreifende Zugfeder (29) zu einander gespannt sind.

## Claims

1. Filler neck for the fuel tank of a motor vehicle, having a funnel-type insert (2) and, adjoining the latter in the tank inward direction, a flap (4) having a locking means, wherein the flap (4) is rotatable about a hinge axis (5), which is displaceable in space, and is held by two elements (6, 7) which are each pivotable about a pin (8, 9), and the flap (4) is only released when the two elements (6, 7) are pivoted simultaneously aside by the filler tube (10) of a gas-pump nozzle, wherein
a) the first element (6) is pivotable about a first pin (8) and holds the hinge pin (5) at its end remote from the first pin (8),
b) the second element (7) is pivotable about a second pin (9) and forms a locking hook (24) at its end remote from the second pin (9),
c) wherein the two pins (8, 9) are at a distance (12) apart in the transverse direction and the two elements (6, 7) are tensioned with respect to one another by at least one spring (29),
**characterized in that** the mounting (13, 14) for the elements (6, 7) is arranged on both sides of the funnel-type insert (2) and in each case one bearing part (32, 42; 34, 40) is integral with the funnel-type insert (2) and the other bearing part (34, 40; 32, 42) is integral with the respective element (6; 7), wherein the elements (6, 7) each form brackets (21, 22) engaging around the funnel-type insert (2) from one bearing (13) to the other (14) and merge, towards the interior of the tank, into a hinge part (23) and into the locking hook (24), respectively.

2. Filler neck according to Claim 1, **characterized in that** the mounting (13, 14) for the first and for the second elements (6, 7) consists in each case of hollow cylinders (32) having an aperture (33) and also of bearing journals (34) having flattened portions (35), wherein the apertures (33) in the hollow cylinders (32) and the flattened portions (35) of the bearing journals (34) are arranged such that the bearing journals (34) are insertable into the hollow cylinders (32) only in a position which is unreachable during operation.

3. Filler neck according to Claim 2, **characterized in that** in the case of the mounting (13, 14) of the first and the second elements (6, 7), the hollow cylinders (32) having an aperture (33) are fitted on the funnel-type insert (2).

4. Filler neck according to Claim 1, **characterized in that** the mounting (13, 14) of the first and second elements (6, 7) consists in each case of cylindrical journals (40) and of cast hollow cylinders (42), wherein the elements (6, 7) are elastically flexible such that in each case the distance (15) between the mountings (13, 14) of an element (6, 7) is elastically increasable for mounting.

5. Filler neck according to Claim 4, **characterized in that** in the case of the mounting (13, 14) of the first and second elements (6, 7), in each case the journals (40) are arranged on the funnel-type insert (2).

6. Filler neck according to Claim 1, **characterized in that** the mounting (13, 14) of the first and second elements (6, 7) consists in each case of cylindrical journals (40) and of cast hollow cylinders (42), wherein the elements (6, 7) are produced by injection-moulding in a mould in which the funnel-type insert is introduced, wherein the elements (6, 7) are produced by encapsulating the journal (40), or by injection-moulding the journal.

7. Filler neck according to Claim 6, **characterized in that** in the case of the mounting (13, 14) of the first and second elements (6, 7), in each case the journal (40) is formed on the funnel-type insert (2) and the hollow cylinder (42) is formed on the element (6, 7).

8. Filler neck according to Claim 1, **characterized in that** the two elements (6, 7) are tensioned with respect to one another by at least one tension spring (29) that acts on them below the mounting (13, 14).

## Revendications

1. Manchon de remplissage pour le réservoir de carburant d'un véhicule automobile, comprenant un insert en forme d'entonnoir (2) et, s'y raccordant vers l'intérieur du côté du réservoir, un volet (4) avec un verrouillage, le volet (4) pouvant tourner autour d'un axe de charnière (5) déplaçable dans l'espace et étant maintenu par deux éléments (6, 7) pouvant pivoter autour d'un axe (8, 9), et le volet (4) n'étant libéré que lorsque les deux éléments (6, 7) sont pivotés simultanément par le tube de remplissage (10) d'un pistolet de remplissage,
a) le premier élément (6) pouvant pivoter autour d'un premier axe (8) et retenant l'axe de charnière (5) à son extrémité éloignée du premier axe (8),
b) le deuxième élément (7) pouvant pivoter autour d'un deuxième axe (9) et formant un crochet de verrouillage (24) à son extrémité éloignée du deuxième axe (9),
c) les deux axes (8, 9) étant espacés l'un de l'autre d'une distance (12) dans la direction transversale et les deux éléments (6, 7) étant serrés l'un vers l'autre par au moins un ressort (29),
**caractérisé en ce que** le support sur palier (13, 14) pour les éléments (6, 7) est disposé de chaque côté de l'insert en forme d'entonnoir (2) et à chaque fois une partie de palier (32, 42 ; 34, 40) est réalisée d'une seule pièce avec l'insert en forme d'entonnoir (2) et l'autre partie de palier (34, 40 ; 32, 42) est réalisée d'une seule pièce avec l'élément respectif (6, 7), les éléments (6, 7) formant à chaque fois des étriers (21, 22) venant en prise autour de l'insert en forme d'entonnoir (2) depuis un palier (13) jusqu'à l'autre (14), et se prolongeant vers l'intérieur du réservoir dans une partie de charnière (23), respectivement dans le crochet de verrouillage (24).

2. Manchon de remplissage selon la revendication 1, **caractérisé en ce que** le support sur palier (13, 14) pour les premier et deuxième éléments (6, 7) se compose à chaque fois d'une part de cylindres creux (32) avec une ouverture (33) et d'autre part de tourillons (34) avec des méplats (35), les ouvertures (33) des cylindres creux (32) et les méplats (35) des tourillons (34) étant disposés de telle sorte que les tourillons (34) puissent être introduits dans les cylindres creux (32) uniquement dans une position ne pouvant pas être atteinte pendant le fonctionnement.

3. Manchon de remplissage selon la revendication 2, **caractérisé en ce que** dans le cas du support sur palier (13, 14) des premier et deuxième éléments (6, 7), les cylindres creux (32) avec l'ouverture (33) sont montés sur l'insert en forme d'entonnoir (2).

4. Manchon de remplissage selon la revendication 1, **caractérisé en ce que** le support sur palier (13, 14) des premier et deuxième éléments (6, 7) se compose à chaque fois de tourillons cylindriques (40) et de cylindres creux fermés (42), les éléments (6, 7) étant élastiquement flexibles, de sorte que dans chaque cas, la distance (15) entre les supports sur palier (13, 14) d'un élément (6, 7) puisse être augmentée élastiquement en vue du montage.

5. Manchon de remplissage selon la revendication 4, **caractérisé en ce que** dans le cas du support sur palier (13, 14) des premier et deuxième éléments (6, 7), les tourillons (40) sont à chaque fois disposés sur l'insert en forme d'entonnoir (2).

6. Manchon de remplissage selon la revendication 1, **caractérisé en ce que** le support sur palier (13, 14) des premier et deuxième éléments (6, 7) se compose à chaque fois de tourillons cylindriques (40) et de cylindres creux fermés (42), les éléments (6, 7) étant fabriqués par injection dans un moule, dans lequel est introduit l'insert en forme d'entonnoir, les éléments (6, 7) étant fabriqués par surmoulage du tourillon (40), ou par injection du tourillon.

7. Manchon de remplissage selon la revendication 6, **caractérisé en ce que** dans le cas du support sur palier (13, 14) des premier et deuxième éléments (6, 7), le tourillon (40) est à chaque fois réalisé sur l'insert en forme d'entonnoir (2) et le cylindre creux (42) est réalisé sur l'élément (6, 7).

8. Manchon de remplissage selon la revendication 1, **caractérisé en ce que** les deux éléments (6, 7) sont serrés l'un vers l'autre par au moins un ressort de traction (29) venant en prise contre ceux-ci en dessous du support sur palier (13, 14).
